# EUROPEAN PATENT APPLICATION

(11) **EP 2 141 607 A1**
(43) Date of publication of application: **06.01.2010**
(21) Application number: 08447032.7
(22) Date of filing: 30.06.2008
(51) Int. Cl.: G06F 13/42

(54) **Method for transferring or erasing data in a master-slave environment**

(71) Applicant: Thomson Telecom Belgium, 2650 Edegem (BE)
(72) Inventor: Nicolas, Christiaens, 9600 Ronse (BE)
(74) Representative: Huchet, Anne

(57) **Abstract**

The present invention relates to a method for transferring or erasing data of a memory (4) in a system comprising at least a slave device (2) connected to a master device (1) by a Serial Peripheral Interface bus (3). According to the invention, the method comprises the steps of:
- the slave device transmits (S1) an interrupt signal to the master device,
- in response to said interrupt signal, the master device transmits (S3) a read command to read a status register of the slave device, said status register storing flags indicating whether a data transfer and/or erase in the memory is requested or not by the slave device,
- in response to said read command, the slave device transmits (S4) the flags of the status register and address information and length information on the data to be transferred or erased, and
- the master device parses the flags (S7) and triggers (S8-S10) a transfer and/or erase operation in accordance with said flags, address information and length information.

## Description

### Field of the invention

The present invention relates to a method for transferring or erasing data of a memory in a system comprising at least a slave device connected to a master device by a Serial Peripheral Interface bus. The invention relates also to a slave device and a master device implementing at least a part of said method.

### Background of the invention

In a classical master-slave environment, the master device selects the slave device with which he wants to communicate to and initiates data transfer with this slave device. There is no means for the slave device to initiate a data transfer to or from a memory connected to the master slave or to initiate data erase in a memory. For example, when a slave device comprises a central processing unit (CPU), this device must be able to download its code from a memory, for example a flash memory, and/or to save its configurations in this memory. But, as the slave device is not the master of the memory, such download or save operation is not possible. Thus, a method enabling the slave device to initiate a data transfer or a data erase in a memory of the system is needed.

### Summary of the invention

The invention proposes a method for transferring or erasing data of a memory in a system comprising at least a slave device connected to a master device by a Serial Peripheral Interface bus, comprising the steps of:
- the slave device transmits an interrupt signal to the master device,
- in response to said interrupt signal, the master device transmits a read command to read a status register of the slave device, said status register storing flags indicating whether a data transfer and/or erase in the memory is requested or not by the slave device,
- in response to said read command, the slave device transmits the flags of the status register and information on the data to be transferred or erased, and
- the master device parses the flags and triggers a transfer and/or erase operation in accordance with said flags, address information and length information.

According to a particular aspect of the invention, the status register stores at least one flag among the following flags:
- a flag indicating whether the slave device requests to read data in the memory;
- a flag indicating whether the slave device requests to write data in the memory;
- a flag indicating whether the slave device requests to erase data in the memory.

In a particular embodiment, the information on the data to be transferred or erased are address information and length information.

In a particular embodiment, the memory is a slave device connected to the master device by the Serial Peripheral Interface bus.

The invention relates also to a master device comprising a Serial Peripheral Interface for communicating with a slave device, said master device being connected to a memory, that is arranged:
- to receive a an interrupt signal from the slave device,
- to transmit, in response to said interrupt signal, a read command to read a status register of the slave device, said status register storing flags indicating whether a data transfer and/or erase in said memory is requested or not by the slave device,
- to receive the flags of the status register and address information and size information on the data to be transferred or erased, and
- to parse the flags and trigger a transfer and/or erase operation in accordance with said flags, address information and size information.

The invention relates also to a slave device comprising a Serial Peripheral Interface for communicating with a master device and a status register storing flags indicating whether a data transfer and/erase is requested or not by the slave device, that is arranged
- to transmit an interrupt signal to the master device,
- to receive a read command to read the status register of the slave device,
- to transmit the flags of the status register and address information and size information on the data to be transferred or erased.

### Brief description of the drawings

A more complete understanding of the present invention may be had by reference to the following Detailed Description when taken in conjunction with the accompanying drawings wherein:
- FIG. 1 depicts a block diagram of a system comprising a master device coupled to a slave device by a Serial Peripheral Interface (SPI) bus in which the inventive method can be implemented;
- FIG.2 depicts a general flowchart of the operation of the master device and the slave device in accordance with a preferred embodiment of the invention;
- FIG.3 depicts a detailed flowchart of the read operation of the flowchart of FIG.2;
- FIG.4 depicts a detailed flowchart of the write operation of the flowchart of FIG.2; and
- FIG.5 depicts a detailed flowchart of the erase operation of the flowchart of FIG.2;

### Detailed description of preferred embodiments

FIG. is a block diagram of a system comprising a master device 1 coupled to a slave device 2 by a Serial Peripheral Interface (SPI) bus 3. A memory 4, which is for example a flash memory, is connected to the master device 1. The SPI bus 3 is a full duplex synchronous serial data link. The devices connected to a SPI bus communicate in slave/master mode and the communication is initiated by the master device. The bus 3 comprises four lines connected between the master device 1 and the slave device 2. A first line is the Slave Select (SS) Line 31 outputted by the master device and carrying a Slave Select signal SS to initiate communication with the slave device. The signal SS is active when it is low. A second line is the Master Output Slave Input (MOSI) line 32 for transferring data or command from the master device to the slave device. A third line is the Master Input Slave Output (MISO line 33 for transferring data or command from the slave device to the master device. A fourth line is the Serial Clock (SCLK) line 34 master device outputted by the master device and carrying a clock signal to synchronize the data transferred on the lines 32 and 33. A bit is transferred at each falling or rising edge of the clock signal.

An interrupt line 5 is also connected between the master device 1 and the slave device 2 for transferring, to the master device, an interrupt signal generated by the slave signal in response to an event. Such an event is a request from the slave device to read, write or erase data in the memory 4. The interrupt signal is active when it is low.

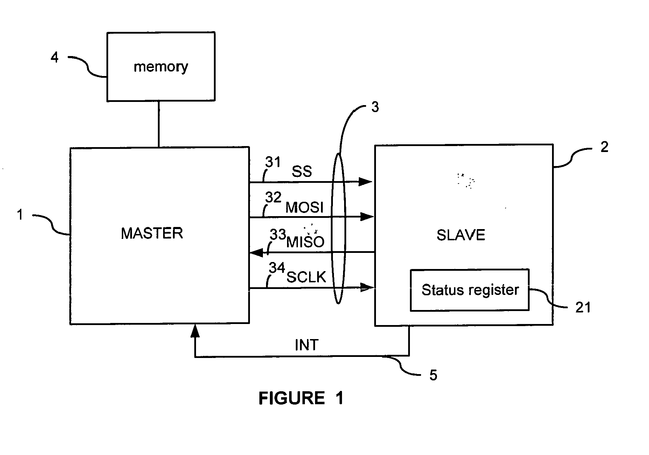

Although it is not shown in the figure 1, the memory 4 can be connected to the master device 1 by the SPI bus 3. In that case, the memory is a second slave device.

According to the invention, the slave device 2 comprises a status register 21. The status register 21 stores at least one of among the following bit flags:
- a bit flag RD which is set when the slave device 2 requests to read data in the memory 4;
- a bit flag WR which is set when the slave device 2 requests to write data in the memory 4;
- a bit flag ER which is set when the slave device 2 requests to erase data in the memory 4.

In a preferred embodiment, the status register 21 stores all these flags. For example, if the status register size is 1 byte, the flags are stored in the status register as follows:

| Bit 7 | Bit 6 | Bit 5 | Bit 4 | Bit 3 | Bit 2 | Bit 1 | Bit 0 |
|---|---|---|---|---|---|---|---|
| X | X | X | X | X | ER | WR | RD |

Any change in the status register 21 setting the flag from 0 to 1 (OFF to ON) is reported to the master device 2 by driving the interrupt line 5 low.

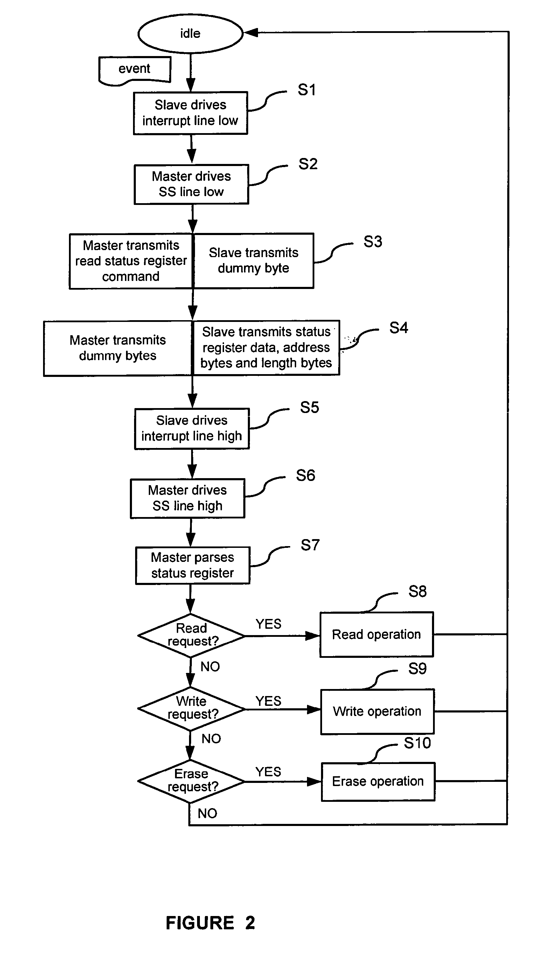

The figure 2 is a general flowchart of the operation of the master device 1 and the slave device 2 when the slave device 2 requests to read, write or erase data in the memory device 4. At the beginning, the master device 1 and the slave device 2 are idle. When an interrupt event occurs (the status register 21 has changed), the slave device 2 drives the interrupt 5 line low at a step S 1 to inform the master device 1 that a data transfer or a data erase is requested by the slave device 2.

The master device 1 initiates communication by taking the SS line 34 low at a step S2.

The master device 1 transmits a read status register command on the MOSI line 32 at a step 102 at a step S3. This read status register is for example the operation code 0x03. Simultaneously, in accordance with the full duplex communication mode, the slave device 2 transmits a dummy byte on the MISO line 33.

In response to this operation code, the slave device 2 transmits the content of the status register, address information and size information to the master device 1 on the MISO line 33 at a step S4. Simultaneously, the master device transmits dummy bytes on the MOSI line 32. In the case of a read or write request, the address information and the length information determines the location of the data to be read or written in the memory and the amount of data to be read or written. The address information is for example the address of the first byte to be read or written in the memory and the length information is the number of bytes to be read or written. In the case of data erase, the address information is for example the address of the 64K sector to be erased. The length information has a different meaning from the preceding case. If the length is 0 (all bits are zero), it means that the slave device requests to erase the entire memory and the address information are then ignored. If the length is non-zero, it means that the slave device requests to erase the sector identified by the address information.

Simultaneously, in accordance with the full duplex communication mode, the master device 1 transmits dummy bytes on the MOSI line 32. If the size of the status register 21 is 1 byte, the size of the address information is 3 bytes and the size of the length information is 3 bytes, the master device 1 transmits 7 dummy bytes during the step S4.

Then, at a step S5, the slave device 2 drives the interrupt line 5 high and, at a step S6, the master device drives the Slave Select line 31 high.

At a step S7, the master device 1 parses the content of the status register and checks if the flags RD, WR and ER are ON or OFF.

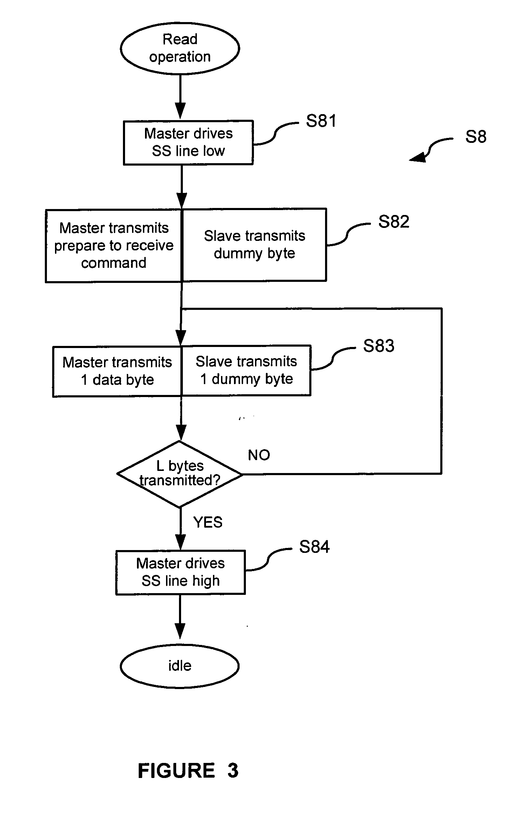

The flag RD is first checked. If the flag RD is ON, a read operation S8 is carried out. This read operation will be described in detail in reference to figure 3.

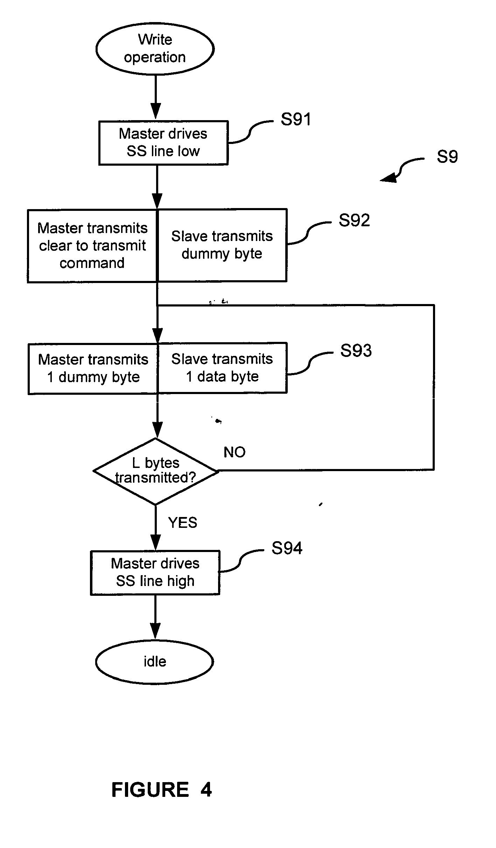

If the flag RD is OFF, the flag WR is checked. If the flag WR is ON, a write operation S9 is carried out. This write operation will be described in detail in reference to figure 4.

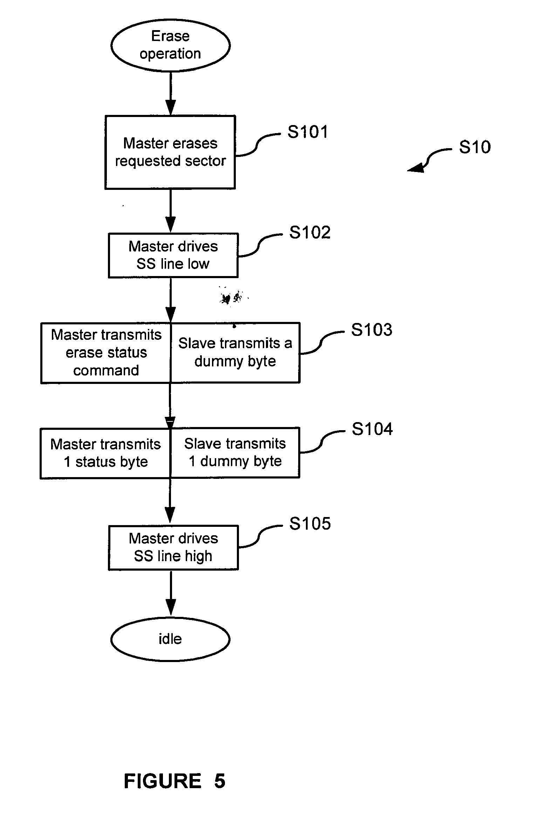

If the flag WR is OFF, the flag ER is checked. If the flag ER is ON, an erase operation S10 is carried out. This erase operation will be described in detail in reference to figure 5. If the flag ER is OFF, the master device 1 and the slave device 2 go back into an idle mode.

It can be noted that the order of the flag checks can be different. For example, the flag WR can be checked before the flag RD.

Figure 3 illustrates the read operation S8. In this operation, the master device 1 drives the Slave Select line 31 low at a step S81. Then, at a step S82, the master device 1 transmits a "prepare to receive" command to the slave device 2 on the MOSI line 32. Simultaneously, in accordance with the full duplex communication mode, the slave device 2 transmits one dummy byte on the MISO line 33. The command "prepare to receive" informs the slave device 2 that it will receive some data bytes. This command is for example the operation code 0x30.

At a following step S83, the master device 1 transmits L data bytes coming from the memory 4 to the slave device on the MOSI line 32. Simultaneously, in accordance with the full duplex communication mode, the slave device 2 transmits, for each data byte received, one dummy byte on the MISO line 33. So the slave device 2 transmits L dummy bytes. L is the number of bytes defined in the length information transmitted at step S4.

At a step S84, the master device 1 drives the Slave Select line 31 high. Then the master device 1 and the slave device go back into the idle mode.

It has to be noted that that some slave devices need the SS line 31 to be toggled for every byte transferred and not only at the beginning and at the end of the transmission of the L bytes. In that case, the read operation of figure 3 comprises additional steps for driving the SS line 31 high after the step S82, for driving the SS line low before the transmission of each data byte of the step S83 and for driving the SS line high after the transmission of each data byte of the step S83. This modification is also valid for the write operation and the erase operation to be followed.

Figure 4 illustrates the write operation S9. In this operation, the master device 1 drives the Slave Select line 31 low at a step S91. Then, at a step S92, the master device 1 transmits a "clear to transmit" command to the slave device 2 on the MOSI line 32. Simultaneously, in accordance with the full duplex communication mode, the slave device 2 transmits one dummy byte on the MISO line 33. This command is for example the operation code 0x0C.

At a following step S93, the master device 1 transmits L dummy bytes 4 to the slave device on the MOSI line 32. Simultaneously, in accordance with the full duplex communication mode, the slave device 2 transmits L dummy bytes on the MISO line 33. L is the number of bytes defined in the length information transmitted at step S4.

At a step S94, the master device 1 drives the Slave Select line 31 high. Then the master device 1 and the slave device go back into the idle mode.

Figure 5 illustrates the erase operation S10. At a step S101, the master device 1 erases the requested sector of the memory, said sector being identified by the address information transmitted at step S4, or erases the whole memory if the length information transmitted at step S4 is 0. Then, at a step 5102, the master device 1 drives the Slave Select line 31 low. At a step S103, the master device 1 transmits a "erase status" command to the slave device 2 on the MOSI line 32. Simultaneously, in accordance with the full duplex communication mode, the slave device 2 transmits one dummy byte on the MISO line 33. The command "erase status" informs the slave device 2 that it will receive the erase status. This command is for example the operation code 0xC0.

At a following step S104, the master device 1 transmits a status byte to the slave device on the MOSI line 32. Simultaneously, in accordance with the full duplex communication mode, the slave device 2 transmits a dummy byte on the MISO line 33. If the status byte is 0 (all bits to 0), it means that the erase has succeeded. A value different from 0 means that the erase has failed.

At a step S105, the master device 1 drives the Slave Select line 31 high. Then the master device 1 and the slave device go back into the idle mode.

The method illustrated by figures 2 to 5 can be implemented in a system comprising a video coder, a gateway and a flash memory. The video coder is the master device and the gateway is the slave device. A read operation upon request of the gateway occurs when the gateway needs to read its firmware in the flash memory and a write operation upon request of the gateway occurs when the gateway needs to update its firmware stored in the flash memory.

While the exemplary embodiments described hereinabove are considered as preferred embodiments, it should be readily understood that various changes and modifications could be made therein without departing from the scope of the present invention as set forth in the following claims.

## Claims

1. Method for transferring or erasing data of a memory (4) in a system comprising at least a slave device (2) connected to a master device (1) by a Serial Peripheral Interface bus (3),
**characterized in that** it comprises the steps of:
- the slave device transmits (S1) an interrupt signal to the master device,
- in response to said interrupt signal, the master device transmits (S3) a read command to read a status register of the slave device, said status register storing flags indicating whether a data transfer and/or erase in the memory is requested or not by the slave device,
- in response to said read command, the slave device transmits (S4) the flags of the status register and information on the data to be transferred or erased, and
- the master device parses the flags (S7) and triggers (S8-S10) a transfer and/or erase operation in accordance with said flags, address information and length information.

2. Method according to claim 1, wherein the status register stores at least one flag among the following flags:
- a flag (RD) indicating whether the slave device requests to read data in the memory;
- a flag (WR) indicating whether the slave device requests to write data in the memory;
- a flag (ER) indicating whether the slave device requests to erase data in the memory.

3. Method according to any one of preceding claims, wherein the information on the data to be transferred or erased are address information and length information.

4. Method according to any one of the claims 1 to 3, wherein the memory is a slave device connected to the master device by the Serial Peripheral Interface bus.

5. Master device comprising a Serial Peripheral Interface for communicating with a slave device, said master device being connected to a memory, **characterized in that** it is arranged:
- to receive a an interrupt signal from the slave device,
- to transmit, in response to said interrupt signal, a read command to read a status register of the slave device, said status register storing flags indicating whether a data transfer and/or erase in said memory is requested or not by the slave device,
- to receive the flags of the status register and address information and size information on the data to be transferred or erased, and
- to parse the flags and trigger a transfer and/or erase operation in accordance with said flags, address information and size information.

6. Slave device comprising a Serial Peripheral Interface for communicating with a master device and a status register storing flags indicating whether a data transfer and/erase is requested or not by the slave device, **characterized in that** it is arranged
- to transmit an interrupt signal to the master device,
- to receive a read command to read the status register of the slave device,
- to transmit the flags of the status register and address information and size information on the data to be transferred or erased.
